# EUROPEAN PATENT APPLICATION

(11) **EP 1 986 336 A2**
(43) Date of publication of application: **29.10.2008**
(21) Application number: 08007544.3
(22) Date of filing: 17.04.2008
(51) Int. Cl.: H04B 1/38, H04M 1/02

(54) **Mobile phone and memory card fixing apparatus**

(30) Priority: 25.04.2007 CN 200710102656
(71) Applicant: ASUSTeK Computer Inc., Peitou, Taipei City (TW)
(72) Inventor: Chen, Yi-An, Peitou, Tapei City (TW); Wu, Wen-Chih, Peitou, Tapei City (TW)
(74) Representative: Schaeberle, Steffen

(57) **Abstract**

A memory card fixing apparatus including a casing (10), a first retaining portion (11) and a second retaining portion (12) is provided. The casing has a fillister (100) with a first side and a second side which is opposite to each other. The first retaining portion (101) connects the first side (101) and the second side (102) and forms a bridge above the fillister (100). The second retaining portion connects the first side (101) and the second side (102), and an opening is formed between the first retaining portion and the second retaining portion. A memory card is inserted into the fillister via the opening.

## Description

### BACKGROUND OF THE INVENTION

### Field of the Invention

The invention relates to a memory card fixing apparatus and, more particularly, to a memory card fixing apparatus of a mobile phone.

### Description of the Related Art

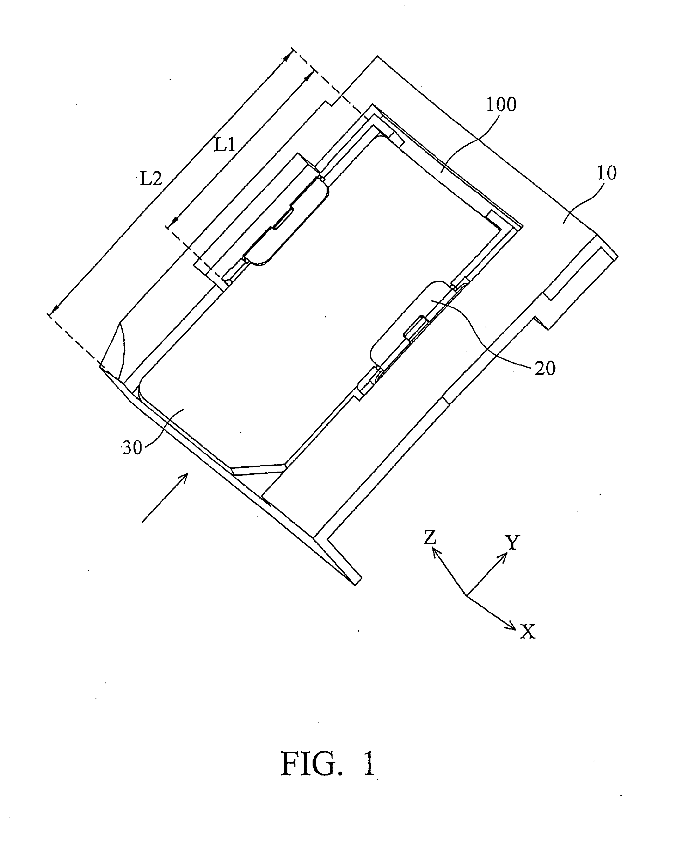

A common mobile phone can be used after a subscriber identity module (SIM) card being putted into the mobile phone. As shown in FIG. 1, a SIM card 30 is inserted into a carrying element 20 on a casing 10 at the back side of a mobile phone along the Y axis direction (as shown by the arrow direction). The carrying element 20 is disposed at the bottom of a fillister 100 on the casing 10. The SIM card 30 can be restricted in the fillister 100 by the carrying element 20, and then the SIM card 30 contacts the connector (not shown) at the bottom of the fillister 100. This enables the SIM card 30 to electrically connect to the main circuit board (not shown) inside the mobile phone.

As shown in FIG. 1, the SIM card 30 has a length L2, and the conventional carrying element 20 has a length L1. Since the length of the conventional carrying element 20 is usually shorter than the length of the SIM card 30 (L1< L2), the carrying element 20 provides a limited fixing effect for the SIM card 30. Especially, when the casing 10 is knocked by external force, the SIM card 30 looses easily and further may be separated from the fillister 100 to lead to affect the normal operating function. Therefore, how to design a preferred memory card fixing apparatus is an important subject.

### BRIEF SUMMARY OF THE INVENTION

One preferred embodiment of the invention discloses a memory card fixing apparatus including a casing, a first retaining portion and a second retaining portion. The casing has a fillister with a first side and a second side opposite to each other. The first retaining portion connects the first side and the second side and forms a bridge above the fillister. The second retaining portion connects the first side and the second side. An opening is formed between the first retaining portion and the second retaining portion, and a memory card is inserted into the fillister via the opening.

The invention also discloses a mobile phone having a casing. The mobile phone includes a fillister having a first side and a second side opposite to the first side, a first retaining portion connecting the first side and the second side and forming a bridge above the fillister and a second retaining portion connecting the first side and the second side. The first retaining portion and the second retaining portion forms an opening, and a memory card is put into the fillister via the opening.

The embodiment of the invention provides a memory card fixing apparatus for a mobile phone. A first retaining portion and a second retaining portion are formed at the opening end of a fillister at the casing of the mobile phone, and they can fix the memory card in the fillister steadily. In addition, since the first retaining portion, the second retaining portion and the casing can be integrally formed, additional components are not needed, and the assembling and manufacturing cost can be effectively reduced.

Therefore, since the conventional technology still has defects, a plan resolving the problems effectively is provided and is necessary for the present technology.

### BRIEF DESCRIPTION OF THE DRAWINGS

FIG. 1 is a schematic diagram showing a conventional memory card fixing apparatus;
FIG. 2 is a schematic diagram showing a memory card fixing apparatus of an embodiment of the invention;
FIG. 3 is a schematic diagram showing that an opening is formed between the first retaining portion and second retaining portion; and
FIG. 4 is a schematic diagram showing that a memory card is inserted into a fillister.

### DETAILED DESCRIPTION OF THE EMBODIMENT

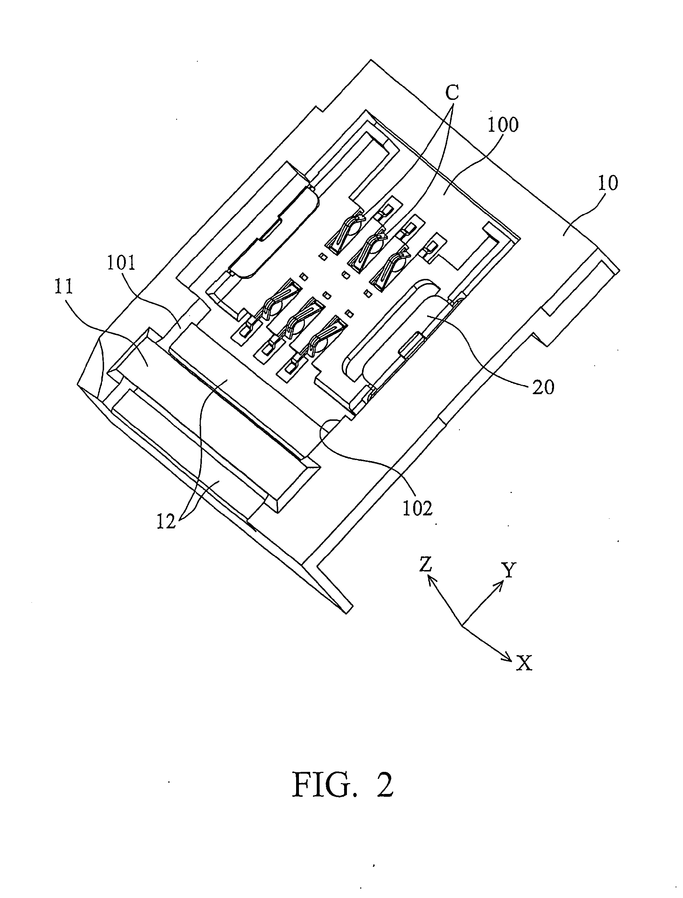

FIG. 2 is a schematic diagram showing a memory card fixing apparatus of a mobile phone. As shown in FIG. 2, the memory card fixing apparatus in the embodiment mainly includes a casing 10 and a carrying element 20. For example, the casing 10 is a part of the plastic outer casing of the mobile phone. A fillister 100 is formed on the casing 10. The carrying element 20 is disposed in the fillister 100 to carry a memory card, such as a SIM card. When the memory card is inserted into the carrying element 20, it contacts the connector C at the bottom of the fillister 100, and thereby enables the memory card to be electrically connected with the main circuit board (not shown) of the mobile phone.

To prevent the memory card form being separated, in the embodiment, at least a strip-shaped first retaining portion 11 and a strip-shaped second retaining portion 12 are disposed at the opening end of the fillister 100 to reinforce the fixing effect. As shown in FIG. 2, the first retaining portion 11 forms a bridge across the fillister 100 and connects the first side 101 and the second side 102 of the fillister 100. The first side 101 is opposite to the second side 102. In addition, the second retaining portion 12 is disposed at the surface of the bottom of the fillister, and also connects the first side 101 and second side 102. In the embodiment, two second retaining portions 12 paralleled to each other and at intervals along the Y axis are provided.

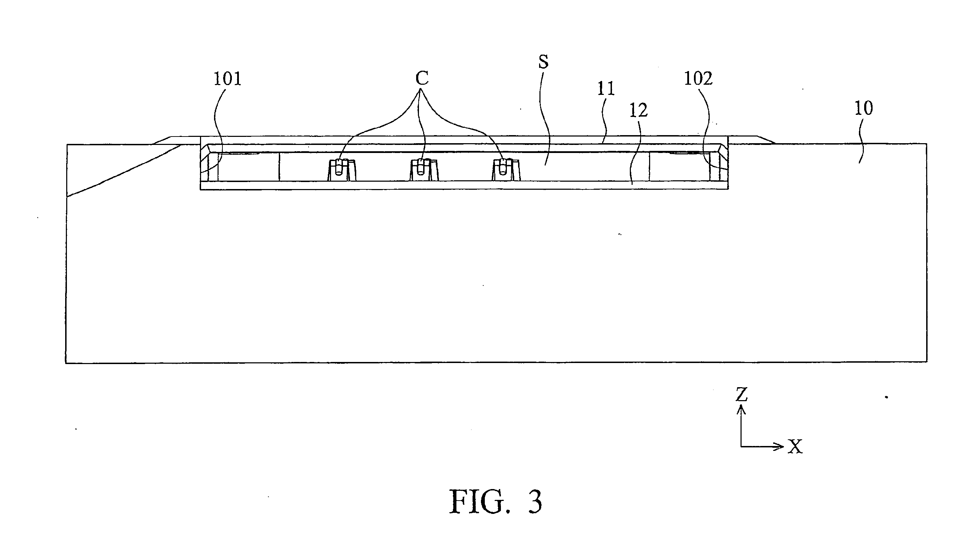

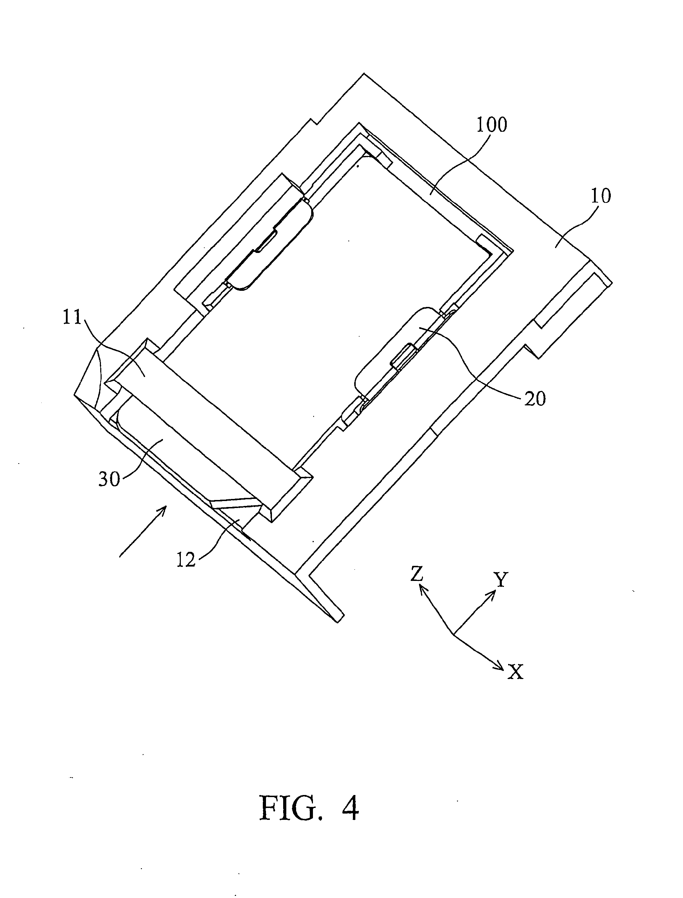

In FIG. 3, since the first retaining portion 11 and the second retaining portion 12 are at different altitudes along the Z axis, an opening S can be formed between the first retaining portion 11 and the second retaining portion 12. The height of the opening S is about the same as the thickness of the memory card. Refer to FIG. 4. When wanting to use a mobile phone, a user can put a memory card 30, such as a SIM card into the carrying element 20 via the opening S formed by the first retaining portion 11 and second retaining portion 12 along the Y axis (as shown by the arrow direction). The first retaining portion 11 having a little flexibility can hold the memory card 30 between the first and second retaining portions 11, 12 to fix the memory card in the fillister 100 steadily and to prevent the memory card 30 from being separated in use. For example, the casing 10, the first retaining portions 11, and the second retaining portions 12 are integrally formed by the plastic injecting molding method. Then, the mechanism design is simplified, and it decreases the assembling and manufacturing cost.

To sum up, the embodiment of the invention provides a memory card fixing apparatus for a mobile phone. The first retaining portion and the second retaining portion formed at the opening end of the fillister on the casing of the mobile phone can fix the memory card in the fillister steadily. In addition, the first retaining portion, the second retaining portion and the casing can be integrally formed, so additional components are not needed, and the assembling and manufacturing cost can be reduced effectively.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A memory card fixing apparatus comprising:
a casing having a fillister with a first side and a second side opposite to each other;
a first retaining portion connecting the first side and the second side and forming a bridge above the fillister; and
a second retaining portion connecting the first side and the second side;
wherein, an opening is formed between the first retaining portion and the second retaining portion, and a memory card is inserted into the fillister via the opening.

2. The memory card fixing apparatus according to claim 1, wherein the memory card is held between the first retaining portion and the second retaining portion.

3. The memory card fixing apparatus according to claim 1, wherein the first retaining portion and the second retaining portion are strip-shaped.

4. The memory card fixing apparatus according to claim 1, wherein the casing, the first retaining portion and the second retaining portion are integrally formed.

5. The memory card fixing apparatus according to claim 4, wherein the casing, the first retaining portion and the second retaining portion are made of plastic.

6. The memory card fixing apparatus according to claim 1, wherein the memory card fixing apparatus further comprises a plurality of second retaining portions disposed at the bottom of the fillister at intervals.

7. The memory card fixing apparatus according to claim 1, wherein the memory card fixing apparatus further comprises a carrying element disposed in the fillister for carrying the memory card.

8. The memory card fixing apparatus according to claim 1, wherein the memory card is a subscriber identity module (SIM) card.

9. A mobile phone having a casing, the mobile phone comprising:
a fillister having a first side and a second side opposite to each other;
a first retaining portion connecting the first side and the second side and forming a bridge above the fillister; and
a second retaining portion connecting the first side and the second side;
wherein an opening is formed between the first retaining portion and the second retaining portion, and a memory card is inserted into the fillister via the opening.

10. The mobile phone according to claim 9, wherein the memory card is held between the first retaining portion and the second retaining portion.

11. The mobile phone according to claim 9, wherein the first retaining portion and the second retaining portion are strip-shaped.

12. The mobile phone according to claim 9, wherein the casing, the first retaining portion and the second retaining portion are integrally formed.

13. The mobile phone according to claim 12, wherein the casing, the first retaining portion and the second retaining portion are made of plastic.

14. The mobile phone according to claim 9, wherein the mobile phone further comprises a plurality of second retaining portions provided at the bottom of the fillister at intervals.

15. The mobile phone according to claim 9, wherein the mobile phone further comprises a carrying element provided in the fillister for carrying the memory card.

16. The mobile phone according to claim 9, wherein the memory card is a subscriber identity module (SIM) card.
